Europäisches Patentamt

European Patent Office

Office européen des brevets

(11) Publication number : **0 544 642 B1**

(12) **EUROPEAN PATENT SPECIFICATION**

(45) Date of publication of patent specification :
02.11.95 Bulletin 95/44

(51) Int. Cl.⁶ : **G11B 5/39**, G11B 5/027

(21) Application number : 93100342.0

(22) Date of filing : 28.02.85

(54) **Magnetic transducer head apparatus utilizing the magnetoresistance effect.**

(30) Priority : 01.03.84 JP 38980/84
08.06.84 JP 117625/84
24.08.84 JP 176476/84
28.08.84 JP 178833/84
28.08.84 JP 178831/84

(43) Date of publication of application :
02.06.93 Bulletin 93/22

(60) Publication number of the earlier application in
accordance with Art. 76 EPC : **0 421 489**

(45) Publication of the grant of the patent :
02.11.95 Bulletin 95/44

(84) Designated Contracting States :
DE FR GB NL

(56) References cited :
GB-A- 2 037 474
US-A- 4 321 685
IBM TECHNICAL DISCLOSURE BULLETIN,
vol. 19, no. 8, January 1977, pages 3222- 3223,
New York, US; T.A. SCHWARZ: "Signal sampl-
ing of pulse-biased MR head"
PATENT ABSTRACTS OF JAPAN, vol. 7, no. 58
(E-163)(1203), 10th March 1983; & JP-A-57 206
145
IBM TECHNICAL DISCLOSURE BULLETIN,
vol. 21, no. 8, January 1979, pages 3339- 3340,
New York, US; T.A. SCHWARZ: "Automatic
bias control for MR heads"

(73) Proprietor : **SONY CORPORATION**
7-35, Kitashinagawa 6-chome
Shinagawa-ku
Tokyo (JP)

(72) Inventor : **Imakoshi, Shigeyoshi, c/o Sony
Corporation**
7-35, Kitashinagawa 6-chome,
Shinagawa-ku
Tokyo (JP)
Inventor : **Suyama, Hideo, c/o Sony
Corporation**
7-35, Kitashinagawa 6-chome,
Shinagawa-ku
Tokyo (JP)
Inventor : **Soda, Yutaka, c/o Sony Corporation**
7-35, Kitashinagawa 6-chome,
Shinagawa-ku
Tokyo (JP)
Inventor : **Fukuyama, Munekatsu, c/o Sony
Corporation**
7-35, Kitashinagawa 6-chome,
Shinagawa-ku
Tokyo (JP)
Inventor : **Iida, Yasuhiro, c/o Sony Corporation**
7-35, Kitashinagawa 6-chome,
Shinagawa-ku
Tokyo (JP)

(74) Representative : **TER MEER - MÜLLER -
STEINMEISTER & PARTNER**
Mauerkircherstrasse 45
D-81679 München (DE)

## Description

The present invention relates to a magnetic transducer head apparatus utilizing the magnetoresistance effect.

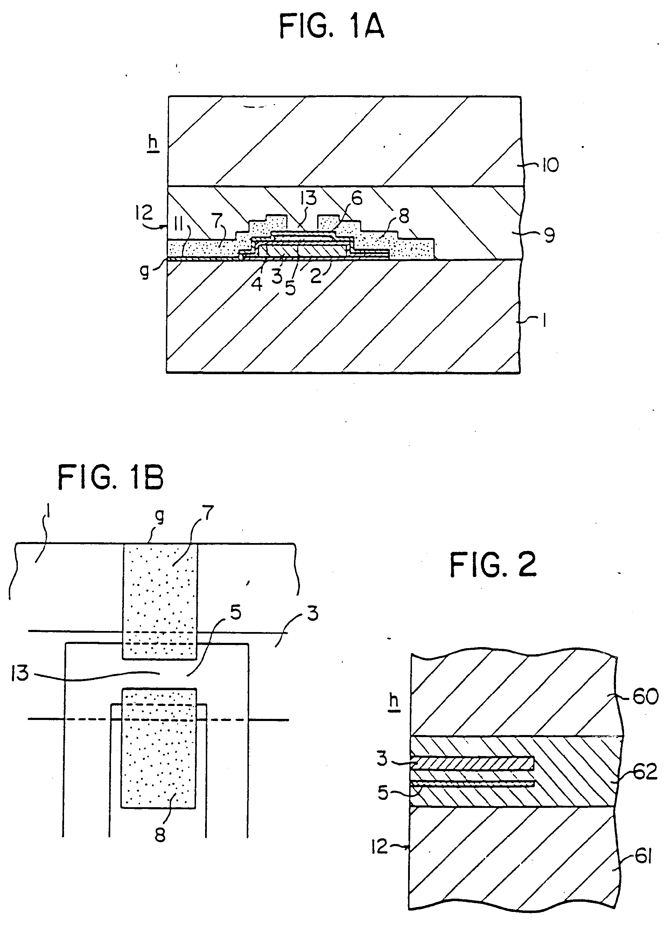

A magnetoresistance (hereinafter referred to as "MR" effect) effect type magnetic head apparatus has a head member h with structure as shown in Fig. 1A and Fig. 1B. Fig. 1A is a sectional view of essential part of an MR head, and Fig. 1B is a plan view thereof. On a magnetic substrate 1 of Ni-Zn ferrite or Mn-Zn ferrite, or through an insulating layer 2 of $SiO_2$ etc. on the substrate 1 if it is conductive, a bias conductor 3 of band-shaped conductive film is applied and constitutes a bias magnetic field generating current passage to apply a bias magnetic field to an MR sensing element as hereinafter described. An MR sensing element 5 comprising a MR magnetic thin film of Ni-Fe alloys or Ni-Co alloys is arranged on the bias conductor 3 through an insulating layer 4. A pair of magnetic layers 7 and 8 of Mo permalloy or the like to constitute a magnetic core of part of a magnetic circuit are formed so that the magnetic layers 7 and 8 ride at each one end on the MR sensing element 5 through a thin insulating layer 6 and extend across the bias conductor 3 and the MR sensing element 5. A protective substrate 10 is provided on the substrate 1 through a non-magnetic protective layer 9. An operating magnetic gap g is formed between one magnetic layer 7 and the front end of the substrate 1 through a non-magnetic gap spacer layer 11 comprising, for example, the insulating layer 6 having a required thickness. Front surface of the substrate 1, the gap spacer layer 11, the magnetic layer 7, the protective layer 9 and the protective substrate 10 is polished thereby an opposing surface 12 to a magnetic recording medium is formed for the magnetic gap g to face thereto. The rear end of the magnetic layer 7 which constitutes the magnetic gap g and the front end of other magnetic layer 8 are formed to ride on the MR sensing element 5 through the insulating layer 6, and both ends are spaced from each other by a discontinuous portion 13. The rear end of the magnetic layer 7 and the front end of the magnetic layer 8 are electrically insulated from the MR sensing element 5 by the insulating layer 6 but magnetically connected. The discontinuous portion 13 between both magnetic layers 7 and 8 is magnetically connected by the MR sensing element 5, so that a magnetic circuit is formed around the substrate 1 - the magnetic gap g - the magnetic layer 7 - the MR sensing element 5 - the magnetic layer 8 - the substrate 1.

Fig. 2 shows an enlarged sectional view of a MR type head apparatus of so-called shield type as another example. In the head apparatus of Fig. 2, a bias conductor 3 and an MR sensing element 5 opposed thereto are disposed between high permeability magnetic bodies 60 and 61 such as ferrite through a non-magnetic layer 62, and one end surface is polished so as to form a tape opposing surface 12.

In such a MR type magnetic head apparatus, signal magnetic flux from the front gap g opposed to the magnetic recording medium flows in the MR element through the above-mentioned magnetic circuit in case of the MR head of Fig. 1A, or directly in the MR element in case of Fig. 2, whereby the resistance value of the MR sensing element 5 varies in response to the external magnetic field by the signal magnetic flux. Variation of the resistance value is detected as voltage variation across the MR sensing element 5, while a sensing current flows through the MR sensing element 5 thereby reproduction of the recording signal on the magnetic recording medium is effected. In this case, the MR sensing element 5 must be magnetically biased in order that the MR sensing element 5 acts linearly as a magnetic sensor of high sensitivity. The bias magnetic field is applied by a magnetic field generated by energizing the bias conductor 3 and a magnetic field generated by the detecting current itself flowing through the MR sensing element 5.

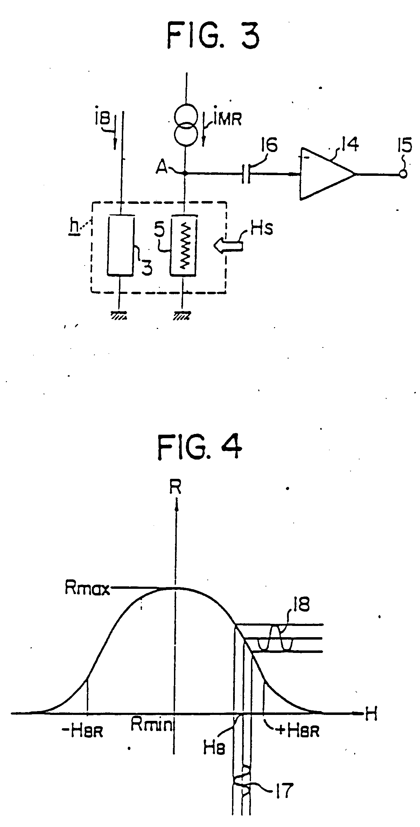

In the MR type magnetic head apparatus as clearly seen in a schematic constitution of Fig. 3, the MR sensing element 5 is applied with the magnetic field generated, while a prescribed d.c. current $i_B$ flows through the bias conductor 3, and at the same time a prescribed sensing current $i_{MR}$ flows through the MR sensing element 5. In such a state, the MR sensing element 5 is applied with a bias magnetic field $H_B$ composed of the magnetic field generated by energizing the bias conductor 3 and the magnetic field generated by the detecting current flowing through the MR sensing element 5.

If under such bias condition the signal magnetic field $H_S$ is applied from the magnetic recording medium, the voltage across the MR sensing element 5 on the basis of resistance variation by the signal magnetic field $H_S$, i.e. variation of potential at point A, is amplified by an amplifier 14 and detected at an output terminal 15. Numerals 16 designates a coupling condensor.

Fig. 4 shows a working characteristic curve of the MR sensing element 5 illustrating the relation between the magnetic field H and the resistance value R. It is clear from Fig. 4 that the resistance R follows a parabolic curve that is convex upwards in the range of the magnetic field H and small in absolute value, i.e. $-H_{BR} \sim +H_{BR}$. The parabolic curve of the resistance R gradually approaches the value $R_{min}$ when the magnetization of the MR magnetic thin film at a center portion becomes saturated in the magnetic circuit direction. Maximum value $R_{max}$ of the resistance R means a state without external field acting on the MR magnetic thin film. The bias magnetic field $H_B$ is applied at a characteristic portion according to the parabolic working characteristic curve, and the signal magnetic field shown by numeral 17 in Fig. 4 is applied from the magnetic recording medium. Corresponding to the signal magnetic field, an output according to variation of the resistance value as shown by numeral 18 in Fig. 4 is obtained. In this case, however, a stronger signal magnetic field results in a higher second harmonic distortion.

In the MR type magnetic head apparatus, the potential at point A of Fig. 3 is determined by the composition of a fixed component and a variable component of the resistance in the MR sensing element 5. Since the fixed component in this case attains about 98% and is largely dependent on temperature, the temperature drift of the potential at point A becomes large. The resistance value R in the MR sensing element 5 is represented by the following formula.

$$R = R_0(1 + \alpha\cos^2\theta) \quad (1)$$

wherein $R_0$ stands for the fixed component of resistance, $\alpha$ stands for maximum resistance variation factor, $\theta$ indicates the angle between the current direction and the magnetizing direction in the MR sensing element 5. For example, if the MR sensing element 5 is an MR magnetic thin film of 81Ni-19Fe alloy (permalloy) with a thickness of 25 nm, the measured value of $\alpha$ becomes about $\alpha = 0.017$. The value of $\alpha$ in this case is dependent more or less on the thickness or the material of the MR magnetic thin film of the MR sensing element 5, and,becomes about $\alpha = 0.05$ at most. On the other hand, $R_0$ is represented by the following formula.

$$R_0 = R_i(1 + a\Delta t) \quad (2)$$

wherein $R_i$ stands for the initial value of resistance, a is a temperature coefficient, and $\Delta t$ refers to a temperature variable component.

The measured value of the temperature coefficient a in the above example of the MR sensing element 5 is about a = 0.0027/deg. This may produce large noise at detecting the d.c. magnetic field. In order to avoid the temperature dependence in the MR magnetic head apparatus, usually a differential circuit arrangement to cancel the temperature dependence must be provided.

Moreover, in such a MR type magnetic head element, since the temperature coefficient is large as above described, for example, when heat generated by energizing the MR sensing element 5 or by the bias current flow through the bias conductor 3 is radiated unstably by friction of the heat element with the magnetic recording medium such that the head temperature varies, large noise, so-called rubbing noise may be produced.

If the amplifier 14 in Fig. 3 has a low-impedance input, assuming that the cut-off frequency of the capacitor 16 is $f_o$, the required capacitance C for the capacitor 16 becomes

$$C = \frac{1}{R\omega_o} \quad (3)$$

wherein $\omega_o = 2\pi f_o$.

If the MR sensing element 5 is made of permalloy with a thickness of 25 nm and a length of 50 $\mu$m, the resistance value R becomes about 120 $\Omega$. If $f_o$ = 1kHz, the value of C must be as large as C = 1.3 $\mu$F. This becomes a problem particularly for a multi-track type magnetic head apparatus.

The permeability in a magnetic circuit, particularly that in the magnetic layers 7 and 8 having relatively small thickness and sectional area, is preferably as large as possible. Since the permeability becomes a maximum when the external magnetic field is zero, application of the above-mentioned bias magnetic field lowers the permeability.

The above-mentioned MR type magnetic head apparatus in a d.c. bias system is advantageous in that the effective track width is large and a narrow track can be easily achieved. On the other hand, it is a disadvantage that the linearity is bad, the d.c. reproduction is difficult, the rubbing noise is large, the Barkhausen noise is large, and the dispersion of the output is large.

The linearity can be improved with a circuit arrangement as disclosed in GB-A-2 037 474. Instead of using a d.c. current, pulses of alternating polarity are supplied to the bias conductor thus periodically shifting the working point of the parabolic working curve between the positive and negative part thereof. The MR type magnetic transducer head apparatus according to that disclosure comprises the features of the preamble of claim 1.

It is the object of the present invention to provide another MR type magnetic transducer head apparatus having good linearity of response, good suppression of the second harmonic distortion, a good temperature stability and a good dynamic range.

The apparatus of the present invention comprises the features of claim 1.

Further details of the invention and embodiments thereof will be described by way of examples with reference to the accompanying drawings, in which:

Fig. 1A      is an enlarged sectional view of an essential part of a MR magnetic head apparatus of the yoke type;

Fig. 1B      is a plan view of the magnetic head apparatus in Fig. 1A;

Fig. 2      is an enlarged sectional view of an essential part of a MR magnetic head apparatus of

| | shield type; |
|---|---|
| Fig. 3 | is an equivalent circuit diagram illustrating a MR magnetic head apparatus in the prior art; |
| Fig. 4 | is a diagram of a MR characteristic curve illustrating operation of a MR head apparatus in the prior art; |
| Fig. 5 | is an equivalent circuit diagram illustrating a circuit arrangement of a MR magnetic head apparatus according to a first embodiment of the invention; |
| Figs. 6A and 6B | are diagrams of a MR characteristic curve illustrating the operation of the MR magnetic head of Fig. 5; |
| Figs. 7A - 7C | depict waveform charts illustrating the operation of the MR magnetic head apparatus; |
| Fig. 8 | is an equivalent circuit diagram illustrating a MR magnetic head apparatus as another embodiment of the invention; and |
| Fig. 9 | is a diagram of a MR characteristic curve illustrating the operation of the magnetic head apparatus of Fig. 9. |

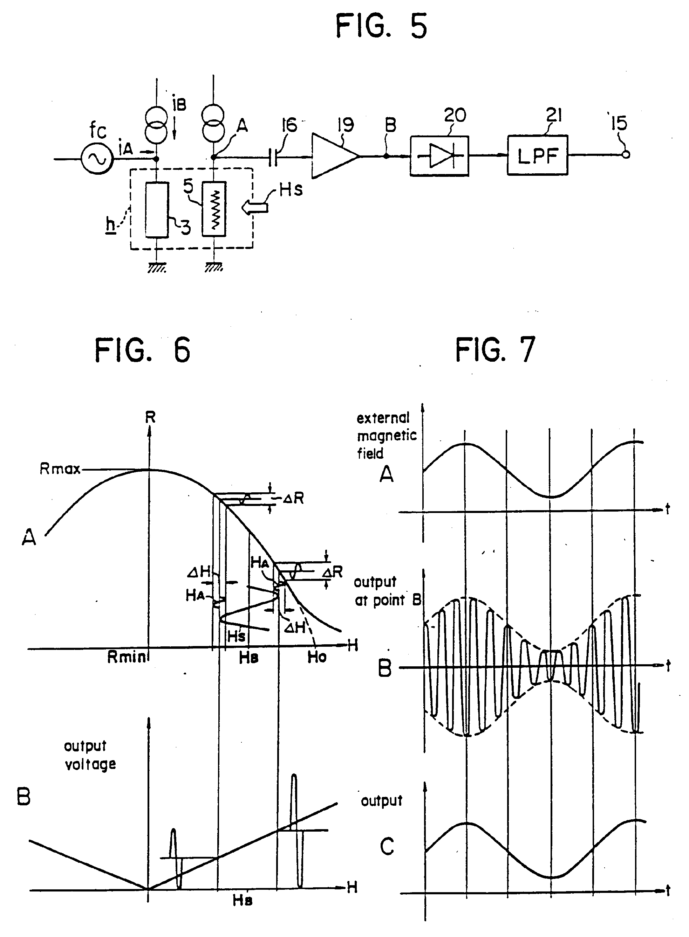

The principle of improving the operating characteristics of a MR type magnetic head will now at first be described referring to Fig. 5. Since this MR type head element h has a similar constitution to that described in Fig. 1 and Fig. 3, parts in Fig. 5 corresponding to Fig. 1 and Fig. 3 are designated by the same reference numerals and the repeated description shall be omitted. In a bias conductor 3 of the head element h, a small a.c. bias current $i_A$ of high frequency $f_c$ flows in superposition to a d.c. bias current $i_B$ whereby a high frequency magnetic field is applied to the MR sensing element 5. The waveform of the a.c. bias current $i_A$, hence the waveform of the a.c. magnetic field may be sinusoidal or rectangular. Thus the MR sensing element 5 is applied with an a.c. bias magnetic field in superposition to the d.c. bias magnetic field whereby an a.c. signal of the frequency $f_c$ is generated across the MR sensing element 5, i.e. at point A in Fig. 5. Fig. 6 shows the operation when the d.c. bias magnetic field $H_B$, the signal magnetic field $H_s$ and the a.c. bias magnetic field $H_A$ are superposed. If the variation $\Delta H$ of the a.c. bias magnetic field $H_A$ is small, the amount of resistance variation $\Delta R$ to the variation of the a.c. bias magnetic field at a moment is obtained as absolute value of a differential of the curve in Fig. 6A. Since this is the differential of a parabolic curve, the variation of the resistance as an output amount of the d.c. bias magnetic field $H_B$ and the signal magnetic field $H_s$ becomes linear in principle as shown in Fig. 6B. Consequently, the amount of the a.c. signal obtained at the point A in Fig. 5 becomes an output which varies corresponding to the sum of the d.c. bias magnetic field $H_B$ and the signal magnetic field from the magnetic recording medium. As shown in Fig. 5, the output of the point A passes through an amplifier 19 to pass the above-mentioned frequency component $f_c$ and is rectified by a rectifier 20 and then passes through a low pass filter 21. Thus, an output is taken out corresponding to the signal magnetic field from the magnetic medium. If the final output obtained at an output terminal 15 must have a frequency band of 0 - 100 kHz, the frequency $f_c$ of the a.c. current $i_A$ can be selected much higher than the frequency band, for example, $f_c = 1$ MHz. In this case, the low cutoff frequency of the amplifier 19 is selected higher than 100 kHz and lower than $f_c = 1$ MHz, for example 500 kHz. The output from the amplifier 19 is rectified by the rectifier 20 and then passes through the low pass filter 21 with a cutoff frequency of 100 kHz as already described. Thus, a signal of the frequency band 0 - 100 kHz is obtained.

In a magnetic head apparatus of such a constitution, if the external magnetic field (signal magnetic field + bias magnetic field) shown in Fig. 7A is applied to the MR sensing element 5, an output shown in Fig 7B, where a carrier of the frequency $f_c$ is amplitude-modulated by the signal, is obtained at point B in Fig. 5, and an output corresponding to the signal magnetic field as shown in Fig. 7C is taken out at the output terminal 15.

In the magnetic head apparatus of the invention, since an output via linear operation characteristics of the MR sensing element 5 corresponding to the differential of the original operation characteristics curve of the second order is taken out, a distortionless reproduction signal can be obtained.

Even if the fixed component of the resistance of the MR sensing element is largely dependent on temperature, the characteristics of the differential of the performance characteristics curve of the MR sensing element can eliminate the influence of the temperature dependence of the fixed component and thus reduce the temperature drift significantly.

Since the temperature dependence of the fixed component of the resistance of the MR sensing element 5 is eliminated as above described, noise caused by rubbing with the magnetic recording medium can be improved as well.

Further, since only the frequency $f_c$ needs to pass the capacitor 16, if $f_c = 500$ kHz for example, the capacitance C of the capacitor 16 may be C = 2600 pF. If the $f_c$ is further increased, the capacitance C may be further reduced.

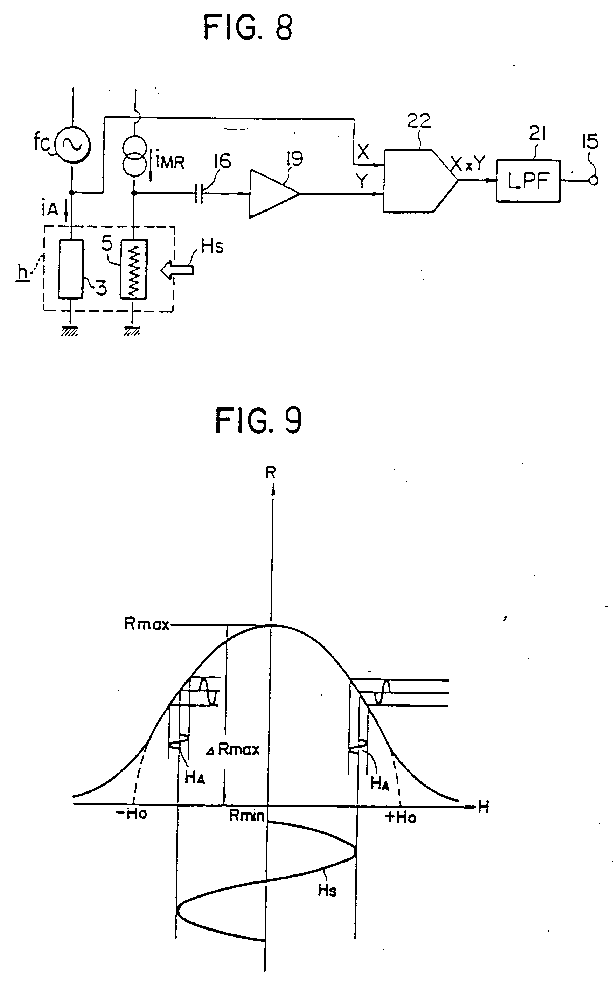

The circuit configuration according to Fig. 8 of a MR type magnetic head provides for some further improvements. Parts in Fig. 8 corresponding to Fig. 5 are designated by the same reference numerals and the repeated description shall be omitted. In this case, a bias conductor 3 is not supplied with a d.c. bias current but with an a.c. bias current $i_A$ only. Fig. 9 shows the operation schematically. In Fig. 9, the real R v: H-operation characteristics curve is shown by a solid line, and the extrapolation of a parabolic curve portion of the characteristics is shown by a broken line and the magnetic field indicating the minimum resistance value $R_{min}$ in the extrapolation becomes $+H_o$ and $-H_o$. As shown in Fig. 9, an a.c. bias magnetic field $H_A$ in superposition to a signal magnetic field $H_s$ is applied in this embodiment. Then, a resistance variation of the MR sensing element 5 in response to the a.c. bias magnetic field is obtained corresponding to polarity and intensity of the signal magnetic field.

In this case, the MR operation characteristics curve is a parabolic curve, and the resistance value $R_{mr}$ of the MR sensing element is represented as follows:

$$R_{mr} = R_{max} - \Delta R_{max} \frac{H^2}{H_o} \quad (4)$$

where $\Delta R_{max} = R_{max} - R_{min}$. The magnetic field H is applied to the MR sensing element 5. The magnetic field H is represented by the sum of the bias magnetic field $H_A(t)$ and the signal magnetic field $H_S(t)$ as follows:

$$H(t) = H_A(t) + H_S(t) \quad (5)$$

where the term $H_A(t)$ is generated by the bias conductor 3 and set to

$$H_A(t) = H_A \cdot \sin(\omega_c t) \quad (6)$$

where

$$\omega_c = 2\pi f_c \quad (7)$$

If the MR detecting current is represented by I, the output V(t) of the MR sensing element 5 becomes

$$V(t) = I \cdot R_{mr} \quad (8)$$

From the above formulae (4), (5), (6), it follows that

$$V(t) = I \cdot R_{max} - I \cdot \frac{\Delta R_{max}}{H_o^2}$$

$$x \{H_{Ao}^2 \cdot \sin^2 t + 2H_{Ao} \cdot H_S(t)$$

$$x \sin(\omega t) + (H_S(t))^2\} \quad (9)$$

Next, the value of V(t) and a signal having the same phase and frequency as that of the a.c. bias magnetic field $H_A$, e.g. sin ($\omega t$), are multiplied by a multiplied 22. The multiplication output $V_z(t)$ becomes

$$V_z(t) = V(t) \cdot \sin(\omega t)$$

$$= I \cdot R_{max} \cdot \sin(\omega t)$$

$$- I \frac{\Delta R_{max}}{H^2} \cdot \{H_{Ao}^2 . \sin^2(\omega t)$$

$$+ 2H_{Ao} \cdot H_s(t) \cdot \sin(\omega t)$$

$$+ (H_S(t))^2\} \cdot \sin(\omega t) \quad (10)$$

Then, the output $V_z$ passes through a low pass filter 21, terms having $\omega$ components in formula (10) are eliminated. It follows therefore that

$$I \cdot R_{max} \cdot \sin(\omega t) \; -> 0 \quad (11)$$

$$H_{Ao}^2 \cdot \sin^2(\omega t)$$

$$= \frac{H_{Ao}}{2} \{\sin \omega t) - \cos(2\omega t)$$

$$x \sin(\omega t)\} \; -> 0 \quad (12)$$

$$2H_{Ao} \cdot H_s(t) \cdot \sin^2(\omega t)$$

$$= H_{Ao} \cdot H_s(t) \cdot \{1 - \cos(2\omega t)\} \; -> H_{Ao} \cdot H_s(t) \quad (13)$$

$$\{H_s(t)\}^2 \cdot \sin(\omega t) \; -> 0 \quad (14)$$

Consequently, the output voltage $V_o(t)$ obtained at a terminal 15 becomes

$$V_o(t) = -I \cdot \Delta R_{max}$$

$$x \frac{H_{Ao} \cdot H_s(t)}{H_o^2} \quad (15)$$

Thus, a voltage proportional to the signal magnetic field $H_S(t)$ is obtained. Even if the signal magnetic field component $H_S(t)$ is contained in the input to the multiplier 22, it does not appear in the output. Consequently, the amplifier 19 is not necessarily always required.

According to the above, an output corresponding to the polarity of the external magnetic field can be taken out. In addition, the dynamic range becomes large. Further, in this case, if the magnetic bias comprises an a.c. component only, a decrease of permeability of the magnetic circuit caused by the d.c. bias magnetic field can be avoided.

## Claims

1. Magnetic transducer head apparatus utilizing the magnetoresistance effect comprising:
   - a magnetoresistance effect sensing element (5) for sensing a signal magnetic field on a travelling magnetic recording medium;
   - a biasing means (6) for magnetically biasing said sensing element;
   - means (16, 19; $16_1$, $19_1$; $16_1$, $19_1$, $24_1$, $45_{1a}$, $45_{1b}$) for obtaining an output signal from said at least one sensing element; and
   - a generator means for supplying said biasing means (6) with a high frequency biasing pulse ($f_c$); characterized in that
   - said generator means is arranged to output a biasing pulse ($f_c$) having a small amplitude compared with an amplitude which would provide for saturation magnetization of said at least one sensing element.

2. A magnetic transducer head apparatus according to claim 1, wherein said.means for deriving said high frequency pulse signal is a rectangular wave generator.

3. The magnetic transducer head apparatus according to claim 1 or 2, wherein said high frequency magnetic field is generated by a high frequency current flow synchronized with said high frequency pulse signal through a biasing conductor (3) provided adjacent to said sensing element.

## Patentansprüche

1. Magnetwandlerkopfeinrichtung mit Nutzung des Magnetowiderstandseffekts, mit
   - einem Meßelement (5) mit Magnetowiderstandseffekt zum Messen eines Signalmagnetfelds auf einem laufenden magnetischen Aufzeichnungsmedium;
   - einer Vormagnetisierungseinrichtung (6) zum Vormagnetisieren des Meßelements;
   - einer Einrichtung (16, 19; $16_1$, $19_1$; $16_1$, $19_1$, $24_1$, $45_{1a}$, $45_{1b}$) zum Erhalten eines Ausgangssignals aus dem mindestens einen Meßelement; und
   - einer Erzeugungseinrichtung zum Versorgen der Vormagnetisierungseinrichtung (6) mit einem hochfrequenten Vormagnetisierungsimpuls ($f_c$);
   **dadurch gekennzeichnet, daß**
   - die Erzeugungseinrichtung so ausgebildet ist, daß sie einen Vormagnetisierungsimpuls ($f_c$) mit kleiner Amplitude im Vergleich zu einer Amplitude ausgibt, die für Sättigungsmagnetisierung des mindestens einen Meßelements sorgen würde.

2. Magnetwandlerkopfeinrichtung nach Anspruch 1, bei der die Einrichtung zum Erzeugen des hochfrequenten Impulssignals ein Rechtecksignalgenerator ist.

3. Magnetwandlerkopfeinrichtung nach einem der Ansprüche 1 oder 2, bei der das hochfrequente Magnetfeld durch einen mit dem hochfrequenten Impulssignal synchronisierten hochfrequenten Strom durch einen Vormagnetisierungsleiter (3) erzeugt wird, der benachbart zum Meßelement vorhanden ist.

## Revendications

1. Appareil transducteur de tête magnétique utilisant l'effet de magnétorésistance comprenant :
   - un élément de détection à effet de magnétorésistance (5) pour détecter un champ magnétique de signal sur un support d'enregistrement magnétique en déplacement ;
     un dispositif de polarisation (6) pour polariser magnétiquement ledit élément de détection ;
   - un dispositif (16, 19 ; $16_1$, $19_1$ ; $16_1$, $19_1$, $24_1$, $45_{1a}$, $45_{1b}$) pour obtenir un signal de sortie dudit au moins un élément de détection ; et
   - un dispositif générateur pour fournir audit dispositif de polarisation (6) une impulsion de polarisation de fréquence élevée (fc) ;
     caractérisé en ce que
     ledit dispositif générateur est disposé pour fournir une impulsion de polarisation (fc) ayant une petite amplitude comparée à une amplitude qui fournirait une magnétisation de saturation dudit au moins un élément de détection.

2. Appareil transducteur à tête magnétique selon la revendication 1, dans lequel ledit dispositif pour dériver ladite impulsion de fréquence élevée est une génération d'onde rectangulaire.

3. Appareil transducteur à tête magnétique selon la revendication 1 ou 2, dans lequel ledit champ magnétique de fréquence élevée est généré par un flux de courant de fréquence élevée synchronisé avec ledit signal d'impulsion de fréquence élevée via un conducteur de polarisation (3) placé au voisinage dudit élément de détection.

# FIG. 1A

# FIG. 1B

# FIG. 2

# FIG. 3

# FIG. 4

# FIG. 5

# FIG. 6

# FIG. 7

# FIG. 8

# FIG. 9